Europäisches Patentamt

European Patent Office

Office européen des brevets

(19)

(11) Numéro de publication: **0 056 214**
A1

## (12) DEMANDE DE BREVET EUROPEEN

(21) Numéro de dépôt: **81420188.5**

(22) Date de dépôt: **22.12.81**

(51) Int. Cl.³: **B 29 F 3/02**, B 29 F 3/01

(30) Priorité: **29.12.80 FR 8027952**

(43) Date de publication de la demande: **21.07.82**
**Bulletin 82/29**

(84) Etats contractants désignés: **CH DE LI SE**

(71) Demandeur: **TREFICABLE PIRELLI, 1, rue des Usines B.P. 13, F-94410 Saint Maurice (FR)**

(72) Inventeur: **Simon, Claude Marcel, 21, rue Beauséjour, Pomponne 77400 Lagny (FR)**

(74) Mandataire: **Pascaud, Claude et al, PECHINEY UGINE KUHLMANN 28, rue de Bonnel, F-69433 Lyon Cedex 3 (FR)**

(54) Procédé et appareillage pour l'extrusion en continu de produits filtrés au travers de filtres fins.

(57) L'invention concerne un procédé et un appareillage pour l'extrusion en continu de produits filtrés au travers d'un filtre fin, permettant l'échange de filtre sans provoquer de variation de débit du produit extrudé, au niveau de la tête d'extrusion.

Une extrudeuse amont (1) débite, au travers d'un réservoir intermédiaire (7), dans une extrudeuse aval (12), qui alimente une tête d'extrusion (13). Le réservoir intermédiaire (7) possède un moyen de filtration (3) du produit extrudé et un moyen d'isolation (5) avec la sortie de l'extrudeuse aval (12).

Pendant l'échange du filtre (3), le produit accumulé dans le réservoir intermédiaire (7) est refoulé vers l'extrudeuse aval (12) qui est ainsi alimentée sans interruption ni variation de débit.

EP 0 056 214 A1

# PROCEDE ET APPAREILLAGE POUR L'EXTRUSION EN CONTINU DE PRODUITS FILTRES AU TRAVERS DE FILTRES FINS

La présente invention concerne un procédé et un appareillage pour l'extrusion en continu au travers d'un filtre fin et, en particulier, pour l'isolation, par extrusion, de polymères thermoplastiques, de fils et câbles électriques.

Il est souvent nécessaire de procéder à une filtration à travers des tamis à mailles très fines des matières extrudables, à diverses températures.

En effectuant des contrôles systématiques sur des lignes d'isolation, on a constaté que, pour la confection des câbles électriques à haute tension isolés à partir de polyoléfines sans charges minérales, réticulables ou non, la filtration à travers des tamis dont les mailles n'excèdent pas quarante micromètres, améliorait très fortement la fiabilité des câbles réalisés et permettait de les utiliser sous des contraintes électriques élevées, de l'ordre de 15 à 20.000 volts par millimètre en courant alternatif, avec un probabilité de survie à terme de 20 à 30 ans tout à fait satisfaisante.

L'extrusion de quantités notables de matière filtrée à ce niveau de pureté et la filtration même à travers ce type de filtre se heurtent à deux difficultés notables qui peuvent apparaître simultanément ou séparément :

- la première difficulté consiste en un colmatage progressif des filtres dû à l'accumulation des impuretés retenues.
Un exemple en est fourni par l'extrusion d'un polyéthylène à haute densité à travers un filtre d'ouverture de maille de 40 μm et d'une surface de l'ordre de 80 cm2.
Le filtre est disposé entre un dispositif d'extrusion (boudineuse à vis) et une tête d'extrusion qui applique le polyéthylène à haute densité sur un câble au débit de 50 kg par heure.
Il a été trouvé que, selon les lots de polyéthylène, la différence de pression entre les faces du filtre croissait de 1 à 3 bars à

2 0056214

l'heure, ce qui, dans les conditions d'emploi, limitait entre 6 et 15 tonnes le total du polyéthylène à haute densité, filtrable sans changement de filtre.

- la seconde difficulté tient à ce que les échauffements subis par la matière en traversant les filtres, conduisent à sa dégradation si l'opération se répète ou à sa réticulation lorsqu'il s'agit d'un produit réticulable par échauffement, comme le polyéthylène réticulé par les péroxydes organiques.

On a tenté, pour pallier la première difficulté, de mettre en place des filtres à défilement de bande filtrante, mais cela n'a pas été possible, dans de nombreux cas, à cause de fuites trop importantes ou de ruptures de bande.

On a également tenté de disposer, dans le flux de matière, un filtre qui puisse être changé par un système à guillotine mû par un vérin hydraulique, mais cette solution exige un arrêt de l'extrudeuse et donc, crée, à chaque changement du filtre, un manque de matière sur le câble en cours d'isolation, qui défile en continu.

Pour pallier la seconde difficulté, on a choisi de réduire au minimum le nombre de fois où la matière est chauffée et extrudée, par exemple en utilisant, dans la confection des câbles, la poudre de polyéthylène haute densité, telle qu'elle sort du réacteur où elle est élaborée.

On a également tenté, en utilisant une double extrudeuse, l'une - dite d'amont - déversant son produit dans la zone d'alimentation de la seconde - dite d'aval - qui peut être indépendante, de séparer les fonctions de filtrage sur l'extrudeuse amont et d'extrusion sur l'extrudeuse aval.

Lorsque l'extrudeuse amont doit être arrêtée, pour changement de filtre, même par un procédé rapide, il n'a pas été possible d'éviter complètement un manque de matière sur le câble correspondant à la rupture d'alimentation de l'extrudeuse aval.

L'objet de l'invention est un procédé d'extrusion en continu de produits filtrés au travers d'un filtre fin, permettant le changement rapide du filtre, sans provoquer de variation sensible du débit du produit extrudé, procédé selon lequel une extrudeuse amont, alimentée en produit à extruder, alimente une extrudeuse aval débitant sur une tête d'extrusion, et caractérisé en ce que le produit à extruder sortant de l'extrudeuse amont, traverse successivement un moyen de filtration à changement rapide, un moyen d'obturation, un réservoir intermédiaire puis entre dans l'extrudeuse aval , et en ce que, pendant l'échange rapide du filtre, on arrête l'extrudeuse amont, on obture l'entrée du réservoir intermédiaire et on refoule le produit qu'il contient vers l'extrudeuse aval, ce qui assure la continuité de l'alimentation, et en ce que l'on remet en marche l'extrudeuse amont et l'on retire le moyen d'obturation dès que l'échange du filtre est effectué.

Un autre objet de l'invention est un appareillage spécifique pour la mise en oeuvre du procédé, comportant une extrudeuse amont, muni d'un moyen d'alimentation en produit à extruder, d'une extrudeuse aval et d'une tête d'extrusion, caractérisé en ce qu'il comporte, entre l'extrudeuse amont et l'extrudeuse aval, un réservoir intermédiaire dont l'entrée est munie d'un filtre à échange rapide et d'un moyen d'obturation, et un compartiment muni d'un piston commandé par un vérin.

Dans tout ce qui suit, nous utiliserons les expressions "amont" ou "entrée" et "aval" ou "sortie" par référence au sens d'écoulement du produit à extruder, figuré par la flèche dans le réservoir intermédiaire (7).

Les figures 1, 2 et 3 illustrent la mise en oeuvre de l'invention.

La figure 1 représente l'ensemble extrudeuse amont-réservoir intermédiaire-extrudeuse aval.

La figure 2 représente l'obturation entre l'extrudeuse amont et le réservoir intermédiaire.

La figure 3 représente le piston de refoulement du produit contenu dans le réservoir en position finale, et immobilisé par un verrouillage.

L'extrudeuse amont (1) (du type boudineuse à vis), reçoit le produit à extruder, par exemple à l'état de granulés, par la goulotte (2). A la sortie de l'extrudeuse (1), se trouve le dispositif de filtre interchangeable (3), commandé par le vérin (4), puis, en aval, le dispositif d'obturation (5) commandé par le vérin (6), qui permet d'isoler de façon étanche, l'extrudeuse amont (1) et le réservoir intermédiaire (7).

Un compartiment latéral (8), de préférence cylindrique, est muni d'un piston (9) commandé par un vérin (10). Un moyen de blocage mécanique (11) permet d'immobiliser le piston (9) en fin de course, de façon à permettre le nettoyage du compartiment (8). La force appliquée par le vérin (10) sur le piston (9) est réglée de façon à le maintenir en équilibre lors du fonctionnement normal du dispositif d'extrusion.

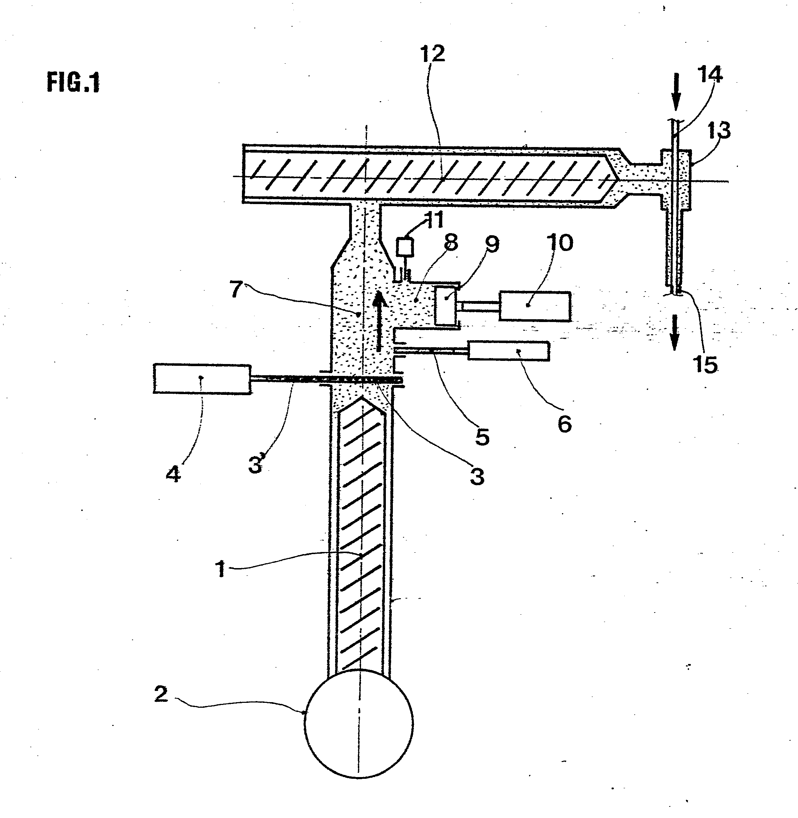

Le produit sortant de l'extrudeuse aval (12) arrive dans la tête d'extrusion (13) qui peut être de tout type connu. Dans le cas particulier représenté sur la figure 1, un fil métallique (14) passe dans la tête d'extrusion (13) dans le sens indiqué par les flèches et ressort en (15) revêtu d'une couche isolante du produit extrudé.

Le réservoir (7) et le compartiment (8) ne sont qu'un exemple particulier de réalisation de l'invention.

Tout moyen équivalent permettant de refouler le produit filtré accumulé dans le réservoir (7), en direction de l'extrudeuse aval (12), en exerçant une pression suffisante, fait partie de l'invention.

Ces moyens peuvent être du type mécanique, pneumatique ou hydraulique, et ils doivent être commandés par un dispositif assurant une régulation de la pression exercée, donc du débit du produit refoulé en direction de l'extrudeuse aval (12).

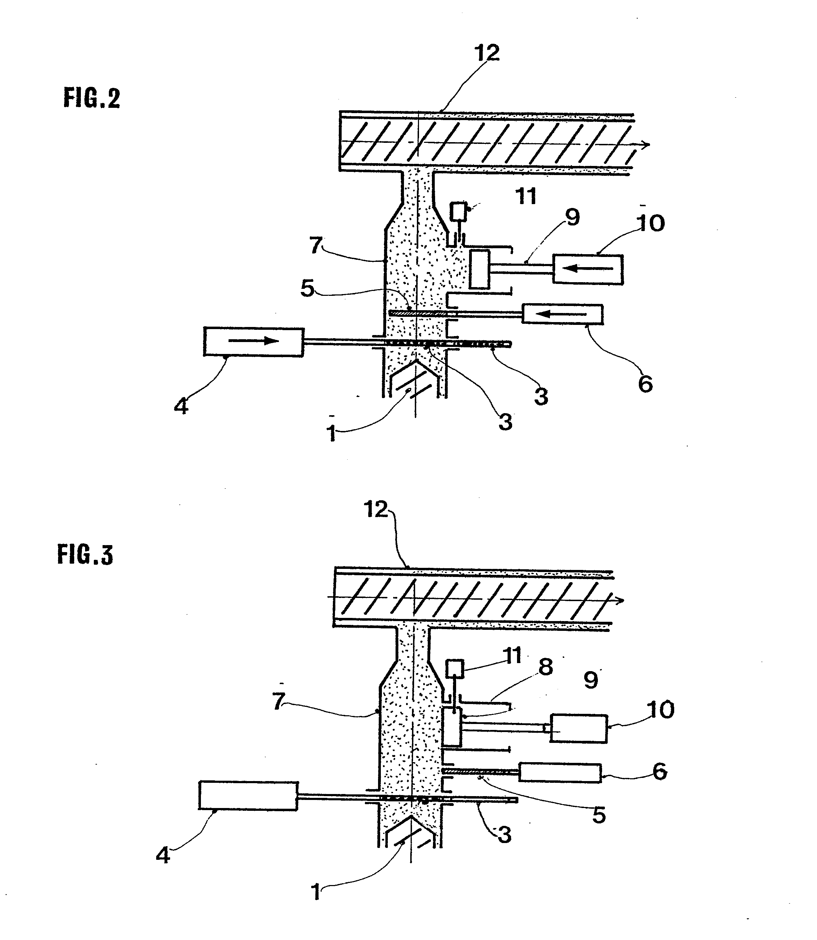

Le fonctionnement du dispositif d'échange du filtre est le suivant : lorsqu'on désire remplacer le filtre (3), partiellement encrassé, par un filtre neuf (3'); on accélère l'extrudeuse amont (1) pendant quelques instants pour assurer le remplissage du réservoir (7). Le piston (9) est en position reculée (figure 1). Puis, on arrête l'extrudeuse amont (1), on met en place l'obturateur (5) et on alimente le vérin (10), de façon à repousser le piston (9) (figure 2), qui refoule le produit filtré vers l'extrudeuse aval (12), qui est ainsi alimentée sans interruption, et à débit constant.

Pendant ce temps, on procède à l'échange du filtre, ce qui ne demande que quelques dizaines de secondes, puis on ouvre le moyen d'obturation (5) et on remet simultanément l'extrudeuse amont (1) en marche.

L'ensemble reprend alors son fonctionnement à travers le filtre (3'), qui a pris la place de (3). On bloque le piston (9) en fin de course (figure 3) au moyen du dispositif de blocage (11), ce qui permet de nettoyer le compartiment (8) et de remettre en (3) un nouveau filtre pour un prochain échange, puis on débloque le piston (9) et on le maintient immobilisé en réglant la pression du vérin (10) de façon à équilibrer la pression qu'exerce, sur sa face avant, le produit en cours d'extrusion.

Il est également possible de réaliser, par un moyen unique, l'échange du filtre et l'obturation provisoire de la sortie de l'extrudeuse aval pendant cet échange. Il suffit, pour cela, que le porte-filtre comporte une partie pleine ( correspondant à 3' sur la figure 2) qui assure l'obturation de la sortie de l'extrudeuse amont (1) et une partie "porte-filtre" (correspondant à 3 sur la figure 2). On opère comme dans le cas précédent, puis, on procède à l'échange du filtre amovible (3) et on ramène le filtre en position de travail, ce qui rétablit la communication entre l'extrudeuse amont (1) et le réservoir intermédiaire (7).

Le volume du réservoir (7) est déterminé en considérant le volume de

6

0056214

matière extrudée durant l'arrêt de l'extrudeuse amont pendant le changement de filtre.

Dans un ensemble débitant 180 litres par heure, si le changement de filtre demande 20 secondes, le volume utile du réservoir intermédiaire (7) sera d'environ un litre.

L'invention s'applique, en particulier, aux lignes d'isolation de fils et câbles électriques par extrusion de polymères thermoplastiques, mais elle peut également s'appliquer à toute extrudeuse dans laquelle il est nécessaire de filtrer le produit extrudé avant son admission dans la tête d'extrusion.

REVENDICATIONS

1º) Procédé d'extrusion en continu d'un produit filtré au travers d'un filtre fin, permettant l'échange du filtre sans provoquer d'interruption ni de variation sensible du débit du produit extrudé au niveau de la tête d'extrusion, procédé dans lequel une extrudeuse amont, alimentée en produit à extruder, alimente une extrudeuse aval débitant sur une tête d'extrusion, caractérisé en ce que le produit à extruder sortant de l'extrudeuse amont, passe au travers d'un filtre interchangeable, franchit un moyen d'obturation, pénètre dans un réservoir intermédiaire muni d'un moyen de mise en pression, puis débouche dans l'extrudeuse aval qui le refoule jusqu'à la tête d'extrusion.

2º) Procédé d'extrusion en continu d'un produit filtré, selon revendication 1, caractérisé en ce que l'échange du filtre comporte les étapes suivantes :
- on arrête l'extrudeuse amont (1),
- on ferme le moyen d'obturation (5), entre l'extrudeuse amont et l'entrée du réservoir intermédiaire (7);
- on refoule le produit filtré contenu dans le réservoir intermédiaire (7) vers l'extrudeuse aval (12).
- on procède à l'échange du filtre (3),
- on ouvre le moyen d'obturation (5),
- on remet en marche l'extrudeuse amont (1).

3º) Procédé d'extrusion en continu d'un produit filtré, suivant revendication 2, caractérisé en ce que, avant d'arrêter l'extrudeuse amont (1) on l'accélère pendant quelques instants , pour assurer le remplissage complet du réservoir intermédiaire (7).

4º) Procédé d'extrusion en continu d'un produit filtré, suivant revendication 2, caractérisé en ce que le refoulement du produit filtré contenu dans le réservoir intermédiaire, vers l'extrudeuse aval, est assuré par un piston (9) commandé par un vérin (10).

5º) Procédé d'extrusion en continu d'un produit filtré, caractérisé en ce que, lors de la remise en marche de l'extrudeuse amont, après échange du filtre, le piston (9) est immobilisé en fin de course.

6°) Procédé d'extrusion en continu d'un produit filtré, suivant revendication 4, caractérisé en ce que, lors du fonctionnement normal du dispositif d'extrusion, le vérin (10) exerce sur le piston (9) une pression sensiblement égale à celle qu'il subit de la part du produit en cours d'extrusion de façon à le maintenir en équilibre.

7°) Appareillage pour la mise en oeuvre du procédé d'extrusion en continu d'un produit filtré, selon l'une quelconque des revendications 1 à 6, permettant l'échange du filtre sans provoquer de variation sensible du produit extrudé, appareillage comportant une extrudeuse amont, une extrudeuse aval et une tête d'extrusion, caractérisé en ce qu'il comporte entre l'extrudeuse amont et l'extrudeuse aval, d'une part, un réservoir intermédiaire de produit à extruder, dont l'entrée, côté amont, est munie d'un filtre interchangeable et d'un moyen d'obturation et, d'autre part, un moyen de refoulement d'au moins une partie du produit à extruder contenu dans le réservoir, en direction de l'extrudeuse aval.

8°) Appareillage selon revendication 7, caractérisé en ce que le moyen de refoulement du produit à extruder est constitué par un piston commandé par un vérin.

9°) Appareillage selon revendication 8, caractérisé en ce que le piston comporte un moyen d'immobilisation en fin de course.

10°) Appareillage selon l'une quelconque des revendications 7 à 9, caractérisé en ce que le filtre interchangeable et le moyen d'obturation sont mécaniquement distincts et commandés séparément.

11°) Appareillage selon l'une quelconque des revendications 7 à 9, caractérisé en ce que le filtre interchangeable et le moyen d'obturation sont réunis et commandés par le même vérin.

FIG.1

0056214

**FIG.2**

**FIG.3**

**Office européen des brevets**

## RAPPORT DE RECHERCHE EUROPEENNE

EP 81 42 0188

| DOCUMENTS CONSIDERES COMME PERTINENTS | | | | CLASSEMENT DE LA DEMANDE (Int. Cl. 3) |
|---|---|---|---|---|
| Catégorie | Citation du document avec indication, en cas de besoin, des parties pertinentes | | Revendication concernée | |
| Y | US - A - 3 706 827 (I.C.I.)  \* brevet en entier \* | | 1,4,7, 8,10 | B 29 F 3/02 3/01 |
| Y | GB - A - 2 044 165 (KABEL- UND METALLWERKE)  \* figure 1 \* | | 1 | |
| A | FR - A - 1 476 753 (RHONE-POULENC)  \* figures 1-4 \* | | 1 | |
| A | US - A - 3 127 637 (REX)  \* en entier \* | | 1 | |

**DOMAINES TECHNIQUES RECHERCHES (Int. Cl. 3)**

B 29 F 3/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 22-04-1982 | KUSARDY |

**OEB Form 1503.1   06.78**